(19) Europäisches Patentamt
European Patent Office
Office européen des brevets

(11) EP 1 979 498 B1

(12) FASCICULE DE BREVET EUROPEEN

(45) Date de publication et mention de la délivrance du brevet:
**29.06.2011 Bulletin 2011/26**

(21) Numéro de dépôt: **07704245.5**

(22) Date de dépôt: **30.01.2007**

(51) Int Cl.:
***C22B 60/02*** (2006.01) ***G21F 9/06*** (2006.01)

(86) Numéro de dépôt international:
**PCT/EP2007/050893**

(87) Numéro de publication internationale:
**WO 2007/085659 (02.08.2007 Gazette 2007/31)**

(54) **PROCEDE DE SEPARATION EN MILIEU AQUEUX D'AU MOINS UN ELEMENT ACTINIDE D'ELEMENTS LANTHANIDES PAR COMPLEXATION ET FILTRATION MEMBRANAIRE**

TRENNVERFAHREN FÜR WÄSSRIGE MEDIEN MIT MINDESTENS EINEM ACTINIDELEMENT AUS LANTHANIDELEMENTEN DURCH KOMPLEXIERUNG UND MEMBRANFILTRIERUNG

AQUEOUS-MEDIUM SEPARATION METHOD OF AT LEAST ONE ACTINIDE ELEMENT FROM LANTHANIDE ELEMENTS BY COMPLEXATION AND MEMBRANE FILTRATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.01.2006 FR 0650325**

(43) Date de publication de la demande:
**15.10.2008 Bulletin 2008/42**

(73) Titulaire: **Commissariat à l'Énergie Atomique et aux Énergies Alternatives**
**75015 Paris (FR)**

(72) Inventeurs:
- **BERNIER, Gilles**
  **F-84000 Avignon (FR)**
- **ADNET, Jean-Marc**
  **F-30131 Pujaut (FR)**
- **FAVRE-REGUILLON, Alain**
  **F-69100 Villeurbanne (FR)**
- **FOOS, Jacques**
  **F-91400 Orsay (FR)**
- **LE BUZIT, Gérard**
  **F-91560 Crosne (FR)**
- **LEMAIRE, Marc**
  **F-69100 Villeurbanne (FR)**
- **PELLET-ROSTAING, Stéphane**
  **F-69100 Villeurbanne (FR)**
- **SORIN, Antoine**
  **F-30400 Villeneuve Les Avignon (FR)**

(74) Mandataire: **Ilgart, Jean-Christophe et al**
**BREVALEX**
**95 rue d'Amsterdam**
**75378 Paris Cedex 8 (FR)**

(56) Documents cités:
**FR-A- 2 714 620**
**US-A- 5 766 478**
**US-A- 5 868 935**
**US-A- 5 925 254**
**US-A- 6 113 796**
**US-B1- 6 843 917**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 979 498 B1

## Description

### DOMAINE TECHNIQUE

La présente invention a trait à un procédé pour séparer au moins un élément actinide d'un ou plusieurs éléments lanthanides contenus dans des effluents aqueux provenant, par exemple, du retraitement d'éléments combustibles nucléaires usés.

De façon plus précise, elle concerne l'utilisation des techniques de filtration mettant en oeuvre des membranes poreuses associées à des techniques de complexation pour séparer un ou des actinides par rapport à des lanthanides ou bien des lanthanides entre eux.

Les effluents issus du retraitement d'éléments combustibles nucléaires usés contiennent généralement des quantités importantes d'éléments actinides, qui génèrent une radioactivité à long terme (généralement supérieure à trois siècles) très nocive pour l'environnement, ces effluents comprenant également des éléments lanthanides à l'état d'oxydation (III). Il importe donc de procéder à une séparation des éléments actinides et des éléments lanthanides, afin de pouvoir isoler des effluents aqueux très appauvris en éléments actinides présentant une radioactivité moins nocive pour l'environnement.

La mise en oeuvre de techniques de séparation des éléments actinides et des éléments lanthanides constitue donc un impératif essentiel pour la préservation de l'environnement.

Initialement, les éléments actinides contenus dans les effluents radioactifs riches en éléments lanthanides étaient séparés par des techniques de précipitation ou d'extraction liquide-liquide. Toutefois, ces techniques présentent l'inconvénient majeur de générer des déchets qu'il convient ensuite de traiter. Cela complique notablement les procédés et cela les affecte d'un lourd handicap économique.

Pour contourner les inconvénients mentionnés ci-dessus, certains auteurs ont pensé à utiliser des membranes pour séparer les éléments lanthanides dans un perméat des éléments actinides dans un rétentat en associant préalablement ces actinides à des molécules complexantes.

Ainsi, il est décrit dans WO 00/73521 un procédé de séparation des éléments actinides des éléments lanthanides contenus dans un effluent aqueux par filtration membranaire associé à une complexation mettant en oeuvre :

- une étape de traitement de l'effluent aqueux, comprenant des actinides et des lanthanides avec une molécule complexante, par exemple de formule suivante :

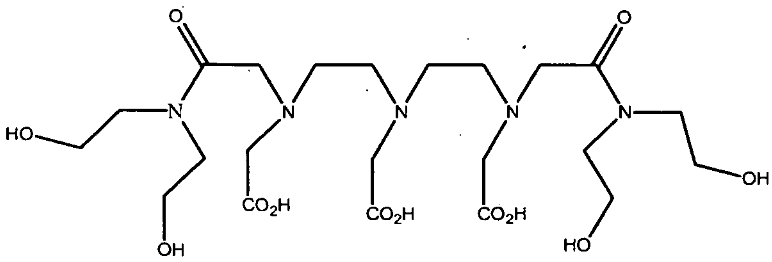

  la molécule complexante formant un complexe 1/1 avec les actinides et/ou les lanthanides;
- une étape de filtration membranaire de l'effluent aqueux traité avec la molécule complexante, de manière à recueillir, d'une part, un rétentat enrichi en américium et un perméat appauvri en américium.

Lorsque les masses moléculaires des molécules complexantes sont supérieures au seuil de coupure de la membrane, il s'ensuit un phénomène d'accumulation des molécules complexantes à la surface de la membrane. Cette accumulation de molécules complexantes peut provoquer un encrassement de la membrane conduisant à une perte irréversible de la perméabilité membranaire. Ce phénomène de concentration a aussi des effets sur la qualité de la rétention de la membrane.

Pour résoudre ce problème d'encrassement généré en partie par des molécules complexantes à l'état libre (c'est-à-dire non complexées), deux alternatives ont été envisagées :

- le lavage à contre-courant de la membrane, en vue d'éliminer la matière organique et inorganique déposée à la surface de celle-ci ;
- l'augmentation de la vitesse de circulation tangentielle de l'effluent à traiter à la surface de la membrane, en augmentant le débit d'alimentation, en modifiant la géométrie de l'écoulement ou en déplaçant la surface membranaire par vibration.

En ce qui concerne la première alternative, une certaine partie de la matière déposée à la surface de la membrane et à l'intérieur des pores ne peut parfois pas être éliminée, ce qui limite la durée d'utilisation de ces membranes.

En ce qui concerne la deuxième alternative, l'ensemble des procédures envisageables engendre un surcoût non négligeable.

La présente invention propose ainsi un procédé de séparation d'au moins un élément actinide d'éléments lanthanides permettant de surmonter les inconvénients susmentionnés, en particulier les inconvénients liés à l'encrassement des membranes par des molécules complexantes utilisées.

## EXPOSÉ DE L'INVENTION

Ainsi, l'invention a trait à un procédé pour séparer, dans un milieu aqueux, au moins un élément actinide d'un ou plusieurs éléments lanthanides mettant en oeuvre au moins une molécule complexante dudit élément actinide à séparer et une filtration par membrane, ledit procédé comprenant successivement :

a) une étape de mise en contact avec le milieu aqueux d'au moins une molécule complexante dudit élément actinide à séparer, ladite molécule n'étant pas retenue à l'état non complexé par ladite membrane et étant apte à former avec l'élément actinide à séparer un complexe comprenant ledit élément et au moins deux desdites molécules complexantes, lequel complexe étant apte à être retenu par la membrane;

b) une étape de passage du milieu aqueux sur la membrane pour former d'un côté un perméat comprenant un effluent aqueux appauvri en ledit élément actinide et un rétentat comprenant ledit complexe.

Comme mentionné précédemment, les molécules complexantes mises en oeuvre dans le procédé de l'invention sont choisis de façon à ne pas être retenues par la membrane à l'état non complexé. Un des critères de choix peut être la masse moléculaire de la molécule complexante à l'état non complexé, qui sera inférieure avantageusement au seuil de coupure de la membrane utilisée. Les molécules complexantes sont choisies également de façon à former avec l'élément actinide à complexer un complexe comprenant ledit élément et au moins deux desdites molécules complexantes, lequel complexe est retenu par la membrane. Cette rétention du complexe peut s'expliquer par la masse moléculaire du complexe formé, qui peut être avantageusement supérieure au seuil de coupure de la membrane (exclusion stérique), et/ou par la charge du complexe formé qui peut être avantageusement de même signe que celle de la membrane polarisée suite au passage de la solution comprenant l'élément à séparer, le complexe se trouvant ainsi retenu à la surface de la membrane par interaction électrostatique (exclusion dite de Donnan).

Contrairement aux procédés de l'art antérieur, les molécules complexantes à l'état non complexé ne sont pas retenues par la membrane et ainsi ne s'accumulent pas à la surface de celle-ci et n'encrassent pas celle-ci.

L'intérêt immédiat de l'invention réside donc dans le choix de molécules complexantes pouvant traverser la membrane de part en part à l'état non complexé et formant entre elles et l'élément à séparer un complexe retenu par la membrane.

Avantageusement, des molécules complexantes susceptibles d'être utilisées pour séparer un élement actinide, tel que l'américium, d'élements lanthanides est un composé monoaromatique porteur sur son cycle d'au moins deux fonctions complexantes choisies parmi -COOH, -CONHOH, $-SO_3H$, $-PO_3H_2$, -P (O) OHQ avec Q représentant un groupe alkyle, hydroxyalkyle ou oxoalkyle. Bien que l'arrangement plan des atomes des fonctions complexantes dans ce type de molécules soit généralement reconnu comme n'étant pas favorable pour toute réaction de complexation, les inventeurs ont pu démontrer, de manière surprenante, que de telles molécules complexantes étaient efficaces pour la séparation d'au moins un élément actinide d'éléments lanthanides.

Par exemple, le composé monoaromatique peut comprendre un ou plusieurs atomes d'oxygène, de soufre et/ou d'azote dans son cycle, en particulier un ou plusieurs atomes d'azote.

Les composés monoaromatiques utilisables peuvent comprendre 6 chaînons. A titre d'exemples de tels composés, on peut citer celui répondant à la formule générale suivante :

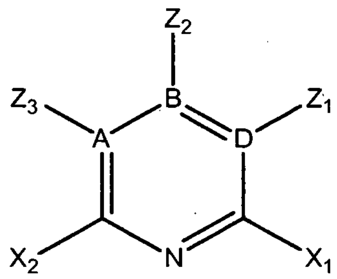

dans laquelle :

- A, B, D représentent indépendamment un atome de carbone ou un atome d'azote ;
- $X_1$ et $X_2$ représentent indépendamment un groupe -COOH, -CONHOH, $-SO_3H$, $-PO_3H_2$ ou -P (O) OHQ avec Q représentant un groupe alkyle, hydroxyalkyle ou oxoalkyle ;
- $Z_1$, $Z_2$ et $Z_3$ sont choisis indépendamment dans le groupe constitué par -H, -F, -Cl, -Br, -I, -OH, -OR, -SR, -NHR, -CHO, -COOR, $-CONR_1R_2$, $-NR_1R_2$, $-NR_1-NR_2R_3$, $-R'-SO_2R$, $-SO_3R$, lorsque A, B et/ou D représente un atome de carbone avec :
- R, $R_1$, $R_2$, $R_3$ représentant indépendamment H, un groupe alkyle ou hydroxyalkyle comprenant de 1 à 6 atomes de carbone ;
- R' représentant un groupe alkylène ou hydroxyalkylène comprenant de 1 à 6 atomes de carbone.

Des exemples spécifiques entrant dans la définition de la formule générale ci-dessus répondent aux formules suivantes :

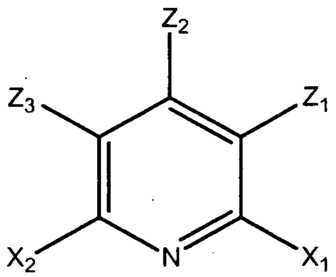

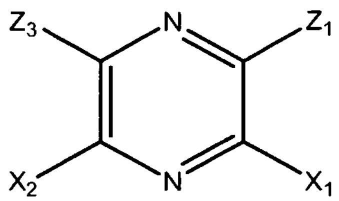

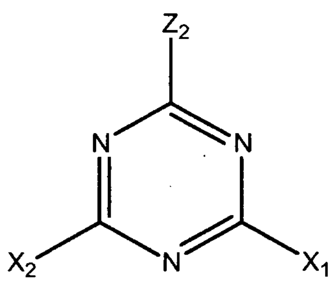

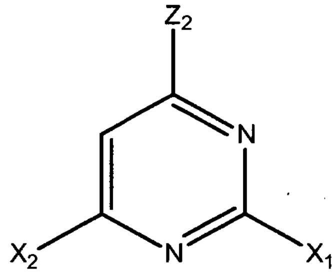

avec $X_1$, $X_2$, $Z_1$, $Z_2$ et $Z_3$ étant tels que définis ci-dessus.
Un composé particulier est celui répondant à la formule suivante:

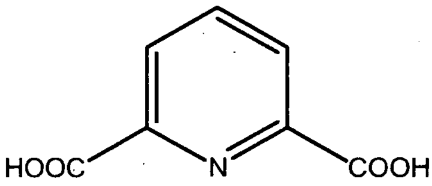

Ce composé est particulièrement efficace pour séparer l'américium d'éléments lanthanides tels que l'europium. Il forme notamment un complexe comprenant trois molécules complexantes avec l'américium.

Les composés monoaromatiques utilisables peuvent comprendre également 5 chaînons, tels que ceux répondant à la formule suivante :

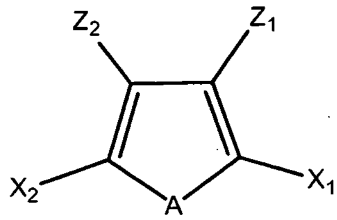

dans laquelle :

- A représente un atome de soufre ou d'oxygène;
- $X_1$ et $X_2$ sont choisis indépendamment dans le groupe constitué par -COOH, -CONHOH, $-SO_3H$, $-PO_3H_2$, - P(O)OHQ avec Q représentant un groupe alkyle, hydroxyalkyle ou oxoalkyle ;
- $Z_1$ et $Z_2$ sont choisis indépendamment dans le groupe constitué par -H, -F, -Cl, -Br, -I, -OH, -OR, -SR, -NHR, -CHO, -COOR, $-CONR_1R_2$, $-NR_1R_2$, $-NR_1-NR_2R_3$, - R' $-SO_2R$, $-SO_3R$ avec :
- R, $R_1$, $R_2$, $R_3$ représentant indépendamment H, un groupe alkyle ou hydroxyalkyle comprenant de 1 à 6 atomes de carbone ;
- R' représentant un groupe alkylène ou hydroxyalkylène comprenant de 1 à 6 atomes de carbone. Les molécules complexantes telles que définies ci-dessus présentent, en particulier, une excellente sélectivité de l'américium par rapport aux éléments lanthanides, tels que l'europium.

Le nombre de moles de molécule complexante ajoutée est tel qu'il soit supérieur ou égal à la quantité équivalente de moles d'actinide à séparer.

Comme mentionné précédemment, le procédé selon l'invention relève de la combinaison entre un procédé de complexation sélective d'éléments actinides par rapport à des éléments lanthanides avec un procédé de séparation par membrane, et plus particulièrement d'ultrafiltration et de nanofiltration pour l'étape b).

Toutefois, le procédé de l'invention ne se limite pas uniquement à l'ultrafiltration et à la nanofiltration mais englobe toute technique membranaire de séparation, dans laquelle on a recours à une membrane semi-perméable formant barrière entre deux milieux homogènes, opposant une inégale résistance au passage de différents constituants d'un fluide (suspension, soluté, solvant). La force permettant le franchissement de la barrière pour une partie desdits constituants peut résulter d'un gradient de pression (microfiltration, ultrafiltration, nanofiltration, osmose inverse), d'un gradient de concentration (dialyse) ou d'un gradient de potentiel électrique (électrodialyse).

Les membranes de filtration, en particulier de nanofiltration ou d'ultrafiltration, susceptibles d'être utilisées dans le cadre du procédé de l'invention peuvent être organiques, minérales ou organo-minérales. Elles doivent être perméables aux molécules complexantes à l'état libre (c'est-à-dire non complexé) de l'invention et retiennent celles-ci lorsqu'elles sont complexées avec le ou les éléments actinides à séparer.

Selon l'invention, et notamment avec les molécules complexantes telles que définies ci-dessus, des membranes utilisées présentent, avantageusement, un seuil de coupure allant de 250 à 10000 Daltons, et plus particulièrement de 1000 à 5000 Daltons.

On précise que le seuil de coupure d'une membrane peut être défini comme la masse molaire d'un soluté (en général, un polyéthylène glycol) dont la rétention est de 90%, l'unité de ce seuil de coupure étant généralement exprimée en daltons.

Les membranes peuvent être réalisées à partir d'au moins un matériau choisi dans le groupe constitué par les polyamides aromatiques, les polysulfones sulfonés, les polybenzimidazolones, les polyfluorures de vinylidène greffés ou non, les polyamides, les esters cellulosiques, les éthers cellulosiques ou ionomères perfluorés, les associations de ces polymères et les copolymères obtenus à partir de monomères d'au moins deux de ces polymères.

Du point de vue de la configuration, les membranes de l'invention sont avantageusement des membranes spiralées ou planes.

A titre d'exemples de membranes pour mettre en oeuvre le procédé de l'invention, on peut citer en particulier les membranes commercialisées par la firme Osmonics sous le nom de Desal GH. Ce type de membrane présente notamment :

- un seuil de coupure de 2500 Daltons ;
- une surface de 0,25 $m^2$ ;
- un flux volumique maximal de perméat de 3 $L.h^{-1}.m^{-2}$ ; et
- une bonne résistance à l'irradiation de la membrane (un débit de dose cumulé de 1 MGy n'a pas entraîné de détérioration visible des polymères constituant la surface de la membrane).

On peut utiliser des modules sous forme de tubes ou de plaques parallèles tels que ceux classiquement utilisés dans cette technique. On peut utiliser également des modules dans lesquels les membranes sont des membranes planes enroulées en spirale autour d'un tube perforé et creux destiné à collecter le perméat.

Pour obtenir les taux de séparation souhaités, on peut agir sur les conditions de traitement telles que le pH de la solution aqueuse à traiter, la différence de pression, la vitesse de circulation de l'effluent aqueux, la température utilisée.

L'étape a) est réalisée, avantageusement, à un pH prédéterminé, de préférence, dans la gamme de 1 à 6, ce pH pouvant être ajusté par addition d'une base ou d'un acide, préférentiellement de NaOH ou de $HNO_3$.

L'étape de filtration est réalisée généralement en appliquant une différence de pression entre les deux faces opposées de la membrane, de façon à recueillir un perméat appauvri en élément(s) actinide(s) à séparer et un rétentat enrichi en élément(s) actinide(s) à séparer. La différence de pression entre les deux faces opposées de la membrane peut varier dans une large gamme, mais de bons résultats peuvent être obtenus en appliquant une différence de pression allant de 1 à 10 bars.

Selon un autre aspect de l'invention, l'invention a trait à l'utilisation d'un composé monoaromatique porteur sur son cycle d'au moins deux fonctions complexantes choisies parmi -COOH, -CONHOH,- $SO_3H$, -$PO_3H_2$, -P (O) OHQ avec Q représentant un groupe alkyle, hydroxyalkyle ou oxoalkyle, pour séparer au moins un élément actinide, tel que l'américium, d'un ou plusieurs éléments lanthanides, par exemple, l'europium, de préférence par filtration membranaire.

Par exemple, le composé monoaromatique comprend un ou plusieurs atomes d'oxygène, de soufre et/ou d'azote dans son cycle, en particulier un ou plusieurs atomes d'azote.

Les composés monoaromatiques utilisables peuvent comprendre 6 chaînons. A titre d'exemples de tels composés, on peut citer celui répondant à la formule suivante :

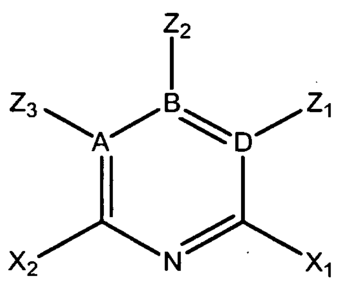

dans laquelle :

- A, B, D représentent indépendamment un atome de carbone ou un atome d'azote ;
- $X_1$ et $X_2$ représentent indépendamment un groupe -COOH, -CONHOH, -$SO_3H$, -$PO_3H_2$ ou -P (O) OHQ avec Q représentant un groupe alkyle, hydroxyalkyle ou oxoalkyle ;
- $Z_1$, $Z_2$ et $Z_3$ sont choisis indépendamment dans le groupe constitué par -H, -F, -Cl, -Br, -I, -OH, -OR, -SR, -NHR, -CHO, -COOR, -$CONR_1R_2$, -$NR_1R_2$,- $NR_1$-$NR_2R_3$, -R'-$SO_2R$, -$SO_3R$, lorsque A, B et/ou D représente un atome de carbone avec :
- R, $R_1$, $R_2$, $R_3$ représentant indépendamment H, un groupe alkyle ou hydroxyallkyle comprenant de 1 à 6 atomes

de carbone ;

- R' représentant un groupe alkylène ou hydroxyalkylène comprenant de 1 à 6 atomes de carbone.

Des exemples spécifiques entrant dans la définition de la formule générale ci-dessus répondent aux formules suivantes :

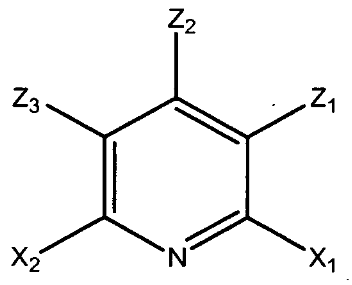

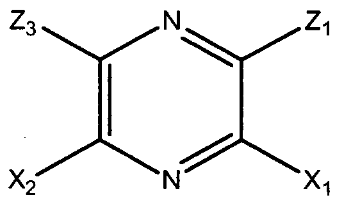

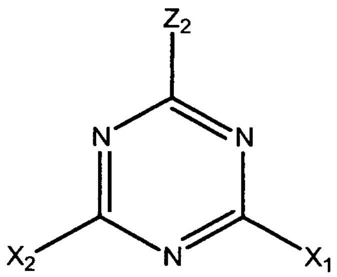

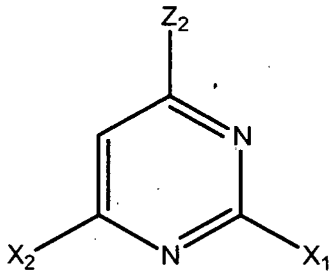

avec $X_1$, $X_2$, $Z_1$, $Z_2$ et $Z_3$ étant tels que définis ci-dessus.

Un composé particulier est celui répondant à la formule suivants :

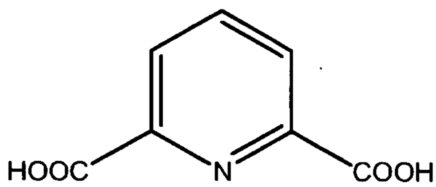

Les composés monoaromatiques utilisables peuvent comprendre également 5 chaînons, tels que ceux répondant à la formule suivante :

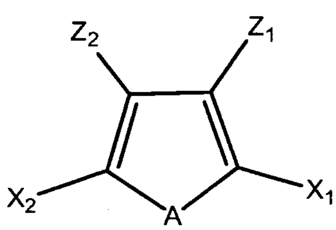

dans laquelle :

- A représente un atome de soufre ou d'oxygène;
- $X_1$ et $X_2$ sont choisis indépendamment dans le groupe constitué par -COOH, -CONHOH, $-SO_3H$, $-PO_3H_2$, - P(O)OHQ avec Q représentant un groupe alkyle, hydroxyalkyle ou oxoalkyle ;

- $Z_1$ et $Z_2$ sont choisis indépendamment dans le groupe constitué par -H, -F, -Cl, -Br, -I, -OH, -OR, -SR, -NHR, -CHO, -COOR, $-CONR_1R_2$, $-NR_1R_2$, $-NR_1-NR_2R_3$, -R' $-SO_2R$, $-SO_3R$ avec :
- R, $R_1$, $R_2$, $R_3$ représentant indépendamment H, un groupe alkyle ou hydroxyallkyle comprenant de 1 à 6 atomes de carbone ;
- R' représentant un groupe alkylène ou hydroxyalkylène comprenant de 1 à 6 atomes de carbone.

Les molécules complexantes telles que définies ci-dessus présentent, en particulier, une excellente sélectivité de l'américium par rapport aux éléments lanthanides.

L'invention va maintenant être décrite par rapport aux exemples suivants donnés à titre illustratif et non limitatif.

## BRÈVE DESCRIPTION DES DESSINS

La figure 1 est une représentation schématique de l'installation de mise en oeuvre du procédé de l'invention.

Les figures 2 et 3 sont des diagrammes représentant respectivement le taux de rétention de l'américium (III) et des éléments lanthanides (III) en fonction du pH et le facteur de séparation de l'américium (III) par rapport à différents éléments lanthanides (III) dans les conditions expérimentales de l'exemple 1.

La figure 4 est un diagramme représentant les variations des taux de rétention de l'américium (III) et de l'europium (III) et des facteurs de séparations Am(III)/Eu(III) (Fs Am/Eu) à pH 2,0 en fonction du rapport [PDCA]/3*{[Am(III)]+[Eu(III)]} dans les conditions expérimentales de l'exemple 2.

La figure 5 est un diagramme représentant les variations des taux de rétention de l'américium Am(III) et de l'europium Eu(III) et des facteurs de séparation Am(III)/Eu(III) à pH 3,0 en fonction du rapport [PDCA]/3*{[Am(III)]+[Eu(III)]} dans les conditions expérimentales de l'exemple 3.

## EXPOSÉ DÉTAILLÉ DE MODES DE RÉALISATION PARTICULIERS

Les exemples ci-dessous sont mis en oeuvre dans une installation de filtration tangentielle représentée sur la figure 1. Cette installation comprend un réservoir 1 en verre double enveloppe d'une capacité de 1 litre contenant l'effluent 3 à traiter et un pH-mètre 2, destiné à mesurer le pH de la solution. Ce réservoir est maintenu à une température appropriée par une boucle de refroidissement 5. L'effluent à traiter est acheminé du réservoir 1 vers le module de filtration 7 par une conduite 9 munie d'une pompe à engrenage 11 permettant de faire varier le débit jusqu'à 900 $L.h^{-1}$ et d'un pressostat différentiel 13, pour protéger contre d'éventuelles pressions anormalement élevées et pour limiter la pression d'opération à un maximum de 4,5 bars. On soutire à partir de ce module de filtration 7, d'une part le rétentat R par la conduite 15 et d'autre part le perméat par la conduite 17. Les conduites 15 et 17 permettent l'acheminement de R et P dans le réservoir 1. La conduite 15 est munie d'un manomètre 19 et d'une vanne pointeau 20 et la conduite 17 est munie d'un débitmètre 23, pour mesurer le flux de perméat et d'un pH-mètre 25 (électrode de pH combinée Ag/AgCl pour mesurer le pH du perméat).

Le manomètre est un manomètre tout inox à bain glycérine gradué de 0 à 10 bars, placé en amont de la vanne pointeau pour assurer les mesures de pression.

Le module de filtration comprend un porte-membrane (référence du modèle : Vessel PV1812, fabriqué par la société SEPRA) en acier inoxydable capable de résister à une pression de 69 bars et à une température de 50°C et une membrane contenue dans le porte-membrane, cette membrane spiralée (Desal GH, Osmotics) de longueur 305,0 mm, de diamètre 47,0 mm et d'épaisseur d'entretoise 0,71 mm.

En outre, la membrane présente les caractéristiques suivante

- un seuil de coupure de 2500 Daltons ;
- une surface de 0,25 $m^2$ ;
- un flux volumique maximal de perméat de 3 $L.h^{-1}.m^{-2}$ ;
- une bonne résistance à l'irradiation de la membrane (un débit de dose cumulé de 1 MGy n'a pas entraîné de détérioration visible des polymères constituant des polymères constituant la surface de la membrane).

## EXEMPLE 1

Une quantité voisine de 5,54 moles d'acide 2,6-pyridine dicarboxylique (PDCA) pesée précisément est solubilisée dans 0,8 litres d'hydroxyde de sodium 0,1 $mol.L^{-1}$. Le pH de la solution est fixé à 1,5 par ajout d'acide nitrique concentré ($[HNO_3]$= 5,0 $mol.L^{-1}$). Une charge composée d'une solution comprenant des éléments lanthanides de degré d'oxydation (III), un traceur d'europium $^{152}Eu(III)$ , un traceur d'américium $^{241}Am$ (III) est ajoutée à la solution initiale.

La charge comprend plus précisément la composition figurant dans le tableau 1.

| Eléments | Concentration en $mmol.L^{-1}$ | Concentration en $mg.L^{-1}$ | Radioactivité en $MBq.L^{-1}$ |
|---|---|---|---|
| $^{241}Am$ (III) | $6,64.10^{-4}$ | $160.10^{-3}$ | 20 |
| $^{152}Eu$ (III) | $1,15.15^{-5}$ | $1,75.10^{-3}$ | 1 |
| La (III) | $2,92.10^{-1}$ | 40,56 | - |
| Ce (III) | $5,65.10^{-1}$ | 79,17 | - |
| Pr (III) | $2,63.10^{-1}$ | 37,06 | - |
| Nd (III) | $9,43.10^{-1}$ | 136,02 | - |
| Sm (III) | $1,76.10^{-1}$ | 26,46 | - |
| Eu (III) | $3,42.10^{-2}$ | 5,2 | - |
| Gd (III) | $3,18.10^{-2}$ | 5,0 | - |
| Totalité des lanthanides (III) | 2,31 | - | - |

Le pH est à nouveau ajusté à 1,3 par ajout d'hydroxyde de sodium concentré ([NaOH] = 5,0 $mol.L^{-1}$). La solution est enfin introduite dans le réacteur. Le flux d'écoulement tangentiel est fixé à 6,5 $L.min^{-1}$, la pression transmembranaire à 1,0 bar et la température à 20°C. Le pH est progressivement augmenté avec des ajouts d'hydroxyde de sodium concentré par palier d'une durée de 45 minutes (durée estimée pour atteindre l'équilibre de la membrane lorsque tous les paramètres opératoires sont constants). Un prélèvement du perméat et du rétentat ainsi qu'une mesure du flux volumique du perméat sont effectués à chaque palier de pH.

Les échantillons sont analysés par ICP-AES (correspondant à la terminologie anglaise « Inductively Coupled Plasma-Atomic Emission Spectroscopy) pour mesurer la concentration en métaux lanthanides (III) et par spectrométrie gamma pour mesurer la concentration en américium (III) et en europium (III) traceur.

La figure 2 illustre le taux de rétention des différents métaux lanthanides (III) et de l'américium (III) en fonction du pH pour un rapport [PDCA] /3* ([Ln (III)] + [Am(III)]) égal à 1.

Les taux de rétention à pH=1,5 des métaux lanthanides (III) sont compris entre 3 et 9% tandis que celui de l'américium (III) atteint 25%. A pH croissant, les taux de rétention de l'américium (III) et des métaux lanthanides (III) augmentent indépendamment jusqu'à atteindre un maximum de 99% à pH 2,0 et atteint la valeur de 24% de séparation, tandis que la plus grande différence de rétention entre l'américium (III) et le lanthane (III) atteint 74% à pH = 2,3.

La figure 3 illustre les variations des facteurs de séparation Am(III)/Ln(III) en fonction du pH, Ln correspondant à l'abréviation de lanthanide.

Pour tous les métaux lanthanides (III), le facteur de séparation Am(III)/Ln(III) atteint un maximum au voisinage de pH = 3,0. Ce maximum est d'autant plus élevé que la constante de stabilité des complexes est faible. Ainsi, la plus grande sélectivité correspond au couple Am(III)/La(III) pour lequel le facteur de séparation atteint 20,5, ce qui montre que le procédé de l'invention est particulièrement approprié pour la séparation de l'américium (III) par rapport au lanthane (III). A l'inverse, la séparation Am(III)/Gd(III) est la plus contraignante avec un facteur de séparation de 3,5.

Le taux de rétention est la fraction d'une espèce donnée qui est retenue par la membrane, relativement à la concentration de cette espèce dans la solution d'alimentation. Il est défini par :

$$R = \left(1 - \frac{C_P}{C_R}\right) \times 100$$

où $C_P$ et $C_R$ sont respectivement les concentrations de l'espèce dans le perméat et dans le rétentat.

Le taux de transmission est défini comme le complément du taux de rétention : T = 100 - R

Le facteur de séparation d'une espèce A relativement à une espèce B ($FS_{A/B}$) est défini par le rapport des taux de transmission de ces deux espèces :

$$FS_{A/B} = \frac{[TR_{An}]}{[TR_{Ln}]} = \frac{[An]_P}{[An]_R} \cdot \frac{[Ln]_R}{[An]_P}$$

où $[An]_P$ et $[An]_R$ sont respectivement les concentrations en actinide dans le perméat et le rétentat, $[Ln]_P$ et $[Ln]_R$ sont respectivement les concentrations en lanthanide dans le perméat et le rétentat

Le facteur de séparation FS An/Ln sera élevé si à la fois le taux de rétention des actinides est très élevé (> 95% par exemple) et si celui des lanthanides est le plus faible possible.

## EXEMPLE 2

Une quantité voisine de 1,85 moles de nitrates d'europium (III), $9,2.10^{-6}$ moles de traceur d'europium $^{152}Eu$ (III) et $5,31.10^{-4}$ moles d'américium $^{241}Am$ (III) sont solubilisées dans 0,8 litres d'eau distillée. Le pH de la solution est fixé à 2,0 par ajout d'acide nitrique concentré ($[HNO_3]$= 5,0 $mol.L^{-1}$) . La solution est ensuite introduite dans le réacteur. Le flux d'écoulement tangentiel est fixé à 6,5 $L.min^{-1}$, la pression transmembranaire à 1,0 bar et la température à 20°C. La concentration en molécule complexante est ensuite progressivement augmentée avec des ajouts d'une solution mère concentrée en molécule complexante ([PDCA]=1,0 $mol.L^{-1}$) par palier de 45 minutes. Un prélèvement du perméat et du rétentat ainsi qu'une mesure du flux volumique du perméat sont effectués à chaque palier de concentration.

La figure 4 présente les variations des taux de rétention de l'américium Am (III) et de l'europium Eu(III) ainsi que le facteur de séparation Am(III)/Eu(III) (Fs Am/Eu) à pH 2,0 en fonction du rapport [PDCA]/3([Eu(III)] + [Am(III)]) de 0 à 6. A cette acidité, le facteur de séparation Fs Am(III)/Eu(III) atteint un maximum de 8,7 pour un rapport de [PDCA] /3([Eu(III)] + [Am(III)]) de 6,0.

## EXEMPLE 3

Le protocole expérimental est similaire à l'exemple 2 sauf que le pH est fixé à 3,0.

La figure 5 illustre les variations des taux de rétention des traces d'américium Am(III) et d'une macroconcentration d'europium Eu(III), ainsi que leur facteur de séparation en fonction du rapport [PDCA]/3([Eu(III)] + [Am(III)]) à pH 3,0.

A pH 3,0, les taux de rétention de l'américium Am(III) et de l'europium Eu(III) augmentent séparément en fonction du nombre d'équivalents de PDCA jusqu'à atteindre un maximum de plus de 99 et 95% respectivement. Le facteur de séparation atteint un maximum de 10,2 pour un apport [PDCA]/3([Eu(III)] + [Am(III)]) de 2,0.

## Revendications

1. Procédé pour séparer, dans un milieu aqueux, au moins un élément actinide d'un ou plusieurs éléments lanthanides mettant en oeuvre au moins une molécule complexante dudit élément actinide à séparer et une filtration par membrane, ledit procédé comprenant successivement :

   a) une étape de mise en contact avec le milieu aqueux d'au moins une molécule complexante dudit élément actinide à séparer, ladite molécule n'étant pas retenue à l'état non complexé par ladite membrane et étant apte à former avec l'élément actinide à séparer un complexe comprenant ledit élément et au moins deux desdites molécules complexantes, lequel complexe étant apte à être retenu par la membrane ;
   b) une étape de passage du milieu aqueux sur la membrane pour former d'un côté un perméat comprenant un effluent aqueux appauvri en ledit élément actinide et un rétentat comprenant ledit complexe.

2. Procédé selon la revendication 1, dans lequel l'élément actinide à séparer est l'américium.

3. Procédé selon la revendication 1 ou 2, dans lequel la molécule complexante est un composé monoaromatique porteur sur son cycle d'au moins deux fonctions complexantes choisies parmi -COOH, -CONHOH, $-SO_3H$, $-PO_3H_2$, -P (O) OHQ avec Q représentant un groupe alkyle, hydroxyalkyle ou oxoalkyle.

4. Procédé selon la revendication 3, dans lequel le composé monoaromatique comprend un ou plusieurs atomes d'oxygène, de soufre et/ou d'azote dans son cycle.

5. Procédé selon la revendication 3 ou 4, dans lequel le composé monoaromatique comprend un ou plusieurs atomes

d'azote dans son cycle.

**6.** Procédé selon la revendication 5, dans lequel le composé monoaromatique est un cycle à 6 chaînons.

**7.** Procédé selon la revendication 5, dans lequel le composé monoaromatique répond à la formule suivante :

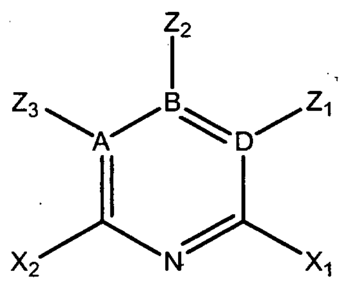

dans laquelle :

- A, B, D représentent indépendamment un atome de carbone ou un atome d'azote ;
- $X_1$ et $X_2$ représentent indépendamment un groupe -COOH, -CONHOH, $-SO_3H$, $-PO_3H_2$ ou -P (O) OHQ avec Q représentant un groupe alkyle, hydroxyalkyle ou oxoalkyle ;
- $Z_1$, $Z_2$ et $Z_3$ sont choisis indépendamment dans le groupe constitué par -H, -F, -Cl, -Br, -I, -OH, -OR, -SR, -NHR, -CHO, -COOR, $-CONR_1R_2$, $-NR_1R_2$, $-NR_1-NR_2R_3$, -R' $-SO_2R$, $-SO_3R$, lorsque A, B et/ou D représente un atome de carbone, avec :
- R, $R_1$, $R_2$, $R_3$ représentant indépendamment H, un groupe alkyle ou hydroxyalkyle comprenant de 1 à 6 atomes de carbone ;
- R' représentant un groupe alkylène ou hydroxyalkylène comprenant de 1 à 6 atomes de carbone.

**8.** Procédé selon la revendication 7, dans lequel le composé monoaromatique répond à l'une des formules suivantes :

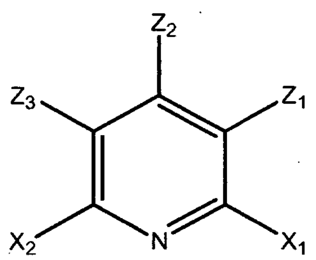

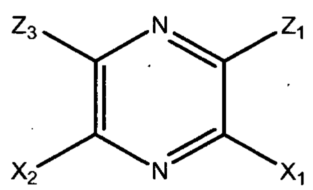

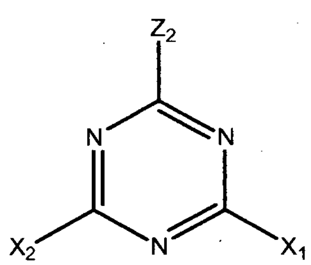

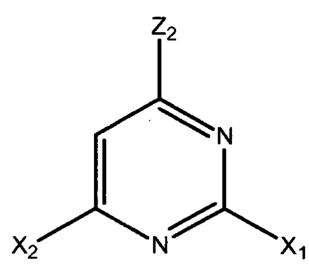

$X_1$, $X_2$, $Z_1$, $Z_2$ et $Z_3$ étant tels que définis à la revendication 7.

**9.** Procédé selon la revendication 8, dans lequel le composé monoaromatique répond à la formule suivante :

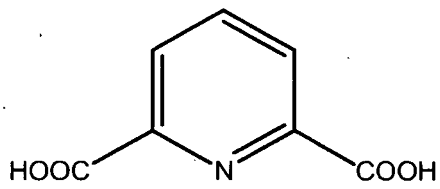

**10.** Procédé selon l'une quelconque des revendications 1 à 5, dans lequel le composé monoaromatique est un cycle à 5 chaînons.

**11.** Procédé selon la revendication 10, dans le composé monoaromatique répond à la formule suivante :

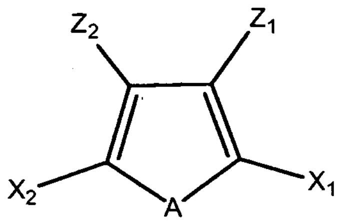

dans laquelle :

- A représente un atome de soufre ou d'oxygène;
- $X_1$ et $X_2$ sont choisis indépendamment dans le groupe constitué par -COOH, -CONHOH, $-SO_3H$, $-PO_3H_2$, -P(O)OHQ avec Q représentant un groupe alkyle, hydroxyalkyle ou oxoalkyle ;
- $Z_1$ et $Z_2$ sont choisis indépendamment dans le groupe constitué par -H, -F, -Cl, -Br, -I, -OH, -OR, -SR, -NHR, -CHO, -COOR, $-CONR_1R_2$, $-NR_1R_2$, $-NR_1-NR_2R_3$, -R' $-SO_2R$, $-SO_3R$ avec :

  - R, $R_1$, $R_2$, $R_3$ représentant indépendamment H, un groupe alkyle ou hydroxyalkyle comprenant de 1 à 6 atomes de carbone ;
  - R' représentant un groupe alkylène ou hydroxyalkylène comprenant de 1 à 6 atomes de carbone.

**12.** Procédé selon l'une quelconque des revendications précédentes; dans lequel l'étape b) est réalisée par ultrafiltration ou nanofiltration

**13.** Procédé selon l'une quelconque des revendications précédentes, dans lequel l'étape de mise en contact a) est réalisée à un pH prédéterminé.

**Claims**

**1.** Process for separating, in an aqueous medium, at least one actinide element from one or more lanthanide elements by using at least one molecule which sequesters the said actinide element to be separated and membrane filtration, the said process successively comprising:

a) a step of bringing at least one molecule which sequesters the said actinide element in contact with the aqueous medium, the said molecule not being retained in the non-complexed state by the said membrane and being capable of forming a complex with the actinide element to be separated, comprising the said element and at least two of the said sequestering molecules, which complex is capable of being retained by the membrane;
b) a step of passing the aqueous medium over the membrane in order to form a permeate on one side, comprising an aqueous effluent depleted of the said actinide element, and a retentate comprising the said complex.

**2.** Process according to Claim 1, wherein the actinide element to be separated is americium.

3. Process according to Claim 1 or 2, wherein the sequestering molecule is a monoaromatic compound carrying at least two sequestering functions on its ring, which are selected from -COOH, -CONHOH, $SO_3H$, $-PO_3H_2$, -P(O)OHQ with Q representing an alkyl, hydroxyalkyl or oxoalkyl group.

4. Process according to Claim 3, wherein the monoaromatic compound comprises one or more oxygen, sulphur and/or nitrogen atoms in its ring.

5. Process according to Claim 3 or 4, wherein the monoaromatic compound comprises one or more nitrogen atoms in its ring.

6. Process according to Claim 5, wherein the monoaromatic compound is a 6-membered ring.

7. Process according to Claim 5, wherein the monoaromatic compound corresponds to the following formula:

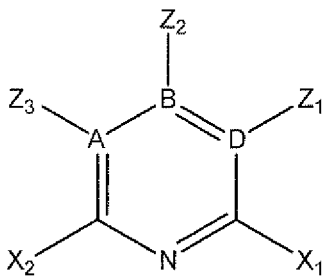

in which:

- A, B, D independently represent a carbon atom or a nitrogen atom;
- $X_1$ and $X_2$ independently represent a -COOH, -CONHOH, $-SO_3H$, $-PO_3H_2$ or -P(O)OHQ group, with Q representing an alkyl, hydroxyalkyl or oxoalkyl group;
- $Z_1$, $Z_2$ and $Z_3$ are selected independently from the group consisting of -H, -F, -Cl, -Br, -I, -OH, -OR, -SR, -NHR, -CHO, -COOR, $-CONR_1R_2$, $-NR_1R_2$, $-NR_1-NR_2R_3$, $-R'-SO_2R$, $-SO_3R$, when A, B and/or D represents a carbon atom, with:
- R, $R_1$, $R_2$, $R_3$ independently representing H, an alkyl or hydroxyalkyl group comprising from 1 to 6 carbon atoms;
- R' representing an alkene or hydroxyalkene group comprising from 1 to 6 carbon atoms.

8. Process according to Claim 7, wherein the monoaromatic compound corresponds to one of the following formulae:

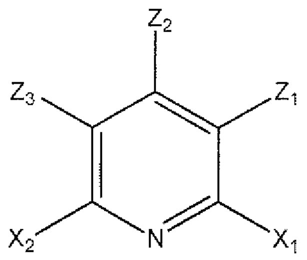

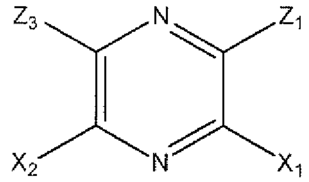

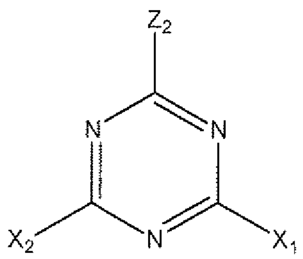

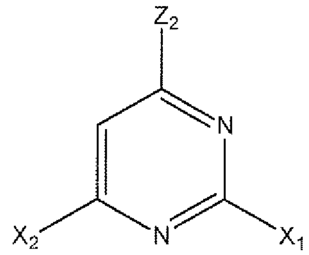

$X_1$, $X_2$, $Z_1$, $Z_2$ and $Z_3$ being as defined in Claim 7.

**9.** Process according to Claim 8, wherein the monoaromatic compound corresponds to the following formula:

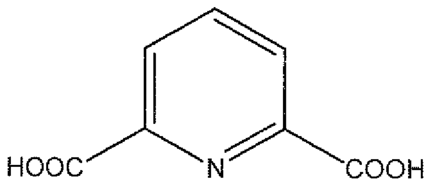

**10.** Process according to any one of Claims 1 to 5, wherein the monoaromatic compound is a 5-membered ring.

**11.** Process according to Claim 10, wherein the monoaromatic compound corresponds to the following formula:

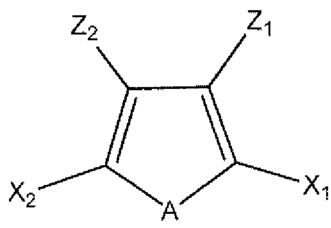

in which:

- A represents a sulphur or oxygen atom;
- $X_1$ and $X_2$ are selected independently from the group consisting of -COOH, -CONHOH, $-SO_3H$, $-PO_3H_2$, -P(O)OHQ with Q representing an alkyl, hydroxyalkyl or oxoalkyl group;
- $Z_1$ and $Z_2$ are selected independently from the group consisting of -H, -F, -Cl, -Br, -I, -OH, -OR, -SR, -NHR, -CHO, -COOR, $-CONR_1R_2$, $-NR_1R_2$, $-NR_1-NR_2R_3$, $-R'-SO_2R$, $-SO_3R$ with:
- R, $R_1$, $R_2$, $R_3$ independently representing H, an alkyl or hydroxyalkyl group comprising from 1 to 6 carbon atoms;
- R' representing an alkene or hydroxyalkene group comprising from 1 to 6 carbon atoms.

12. Process according to any one of the preceding claims, wherein step b) is carried out by ultrafiltration or nanofiltration.

13. Process according to any one of the preceding claims, wherein the contacting step a) is carried out with a predetermined pH.

**Patentansprüche**

1. Verfahren zur Abtrennung von mindestens einem Actinoidelement von einem oder mehreren Lanthanoidelementen in einem wässrigen Medium unter Verwendung von mindestens einem Molekül, das mit dem abzutrennenden Actinoidelement einen Komplex bildet, und Filtration durch eine Membran, wobei das Verfahren aufeinanderfolgend umfasst:

   a) eine Stufe des Inkontaktbringens von mindestens einem Molekül, das mit dem abzutrennenden Actinoidelement einen Komplex bildet, mit dem wässrigen Medium, wobei das Molekül im nicht-komplexgebundenen Zustand durch die Membran nicht zurückgehalten wird und mit dem abzutrennenden Actinoidelement einen Komplex bilden kann, der das Element und mindestens zwei der komplexbildenden Moleküle umfasst, wobei der Komplex durch die Membran zurückgehalten werden kann;
   b) eine Stufe des Führens des wässrigen Mediums über die Membran zur Bildung von einerseits einem Permeat, das einen an dem Actinoidelement verarmten wässrigen Abfluss umfasst, und einem Retentat, das den Komplex umfasst.

2. Verfahren nach Anspruch 1, wobei das abzutrennende Actinoidelement Americium ist.

3. Verfahren nach Anspruch 1 oder 2, wobei das komplexbildende Molekül eine monoaromatische Verbindung ist, die an deren Ring mindestens zwei komplexbildende Funktionen trägt, die aus -COOH, -CONHOH, $-SO_3H$, $-PO_3H_2$, -P(O)OHQ, wobei Q für eine Alkyl-, Hydroxyalkyl- oder Oxoalkylgruppe steht, ausgewählt sind.

4. Verfahren nach Anspruch 3, wobei die monoaromatische Verbindung ein oder mehrere Sauerstoff-, Schwefel- und/oder Stickstoffatome in deren Ring umfasst.

5. Verfahren nach Anspruch 3 oder 4, wobei die monoaromatische Verbindung ein oder mehrere Stickstoffatome in deren Ring umfasst.

6. Verfahren nach Anspruch 5, wobei die monoaromatische Verbindung ein Ring mit 6 Kettengliedern ist.

7. Verfahren nach Anspruch 5, wobei die monoaromatische Verbindung der folgenden Formel entspricht:

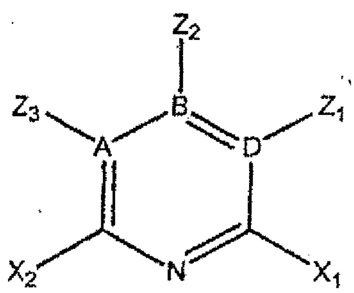

worin:

   - A, B, D unabhängig voneinander für ein Kohlenstoffatom oder ein Stickstoffatom stehen;
   - $X_1$ und $X_2$ unabhängig voneinander für eine Gruppe -COOH, -CONHOH, $-SO_3H$, $-PO_3H_2$ oder -P(O)OHQ, wobei Q für eine Alkyl-, Hydroxyalkyl- oder Oxoalkylgruppe steht, stehen;
   - $Z_1$, $Z_2$ und $Z_3$ unabhängig voneinander aus der Gruppe von -H, -F, -Cl, -Br, -I, -OH, -OR, -SR, -NHR, -CHO, -COOR, $-CONR_1R_2$, $-NR_1R_2$, $-NR_1-NR_2R_3$, -R' $-SO_2R$, $-SO_3R$ ausgewählt sind, wenn A, B und/oder D für ein Kohlenstoffatom stehen, wobei:

- R, $R_1$, $R_2$, $R_3$ unabhängig voneinander für H, eine Alkyl- oder Hydroxyalkylgruppe, die 1 bis 6 Kohlenstoffatome aufweisen, stehen;
- R' für eine Alkylen- oder Hydroxyalkylengruppe, die 1 bis 6 Kohlenstoffatome aufweisen, steht.

**8.** Verfahren nach Anspruch 7, wobei die monoaromatische Verbindung einer der folgenden Formeln entspricht:

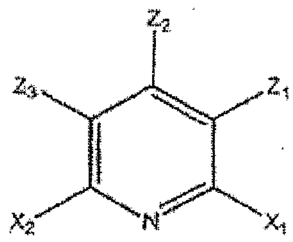
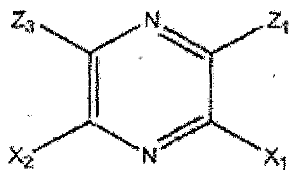
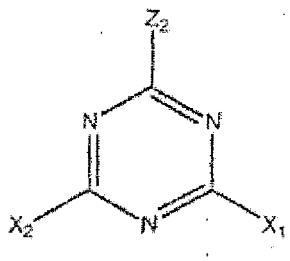
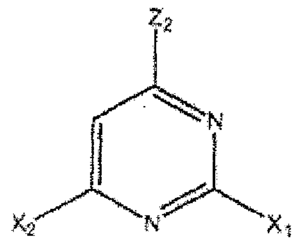

wobei $X_1$, $X_2$, $Z_1$. $Z_2$ und $Z_3$ wie in Anspruch 7 definiert sind.

**9.** Verfahren nach Anspruch 8, wobei die monoaromatische Verbindung der folgenden Formel entspricht:

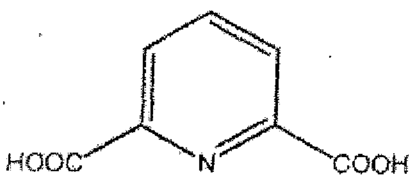

**10.** Verfahren nach einem der Ansprüche 1 bis 5, wobei die monoaromatische Verbindung ein Ring mit 5 Kettengliedern ist.

**11.** Verfahren nach Anspruch 10, wobei die monoaromatische Verbindung der folgenden Formel entspricht:

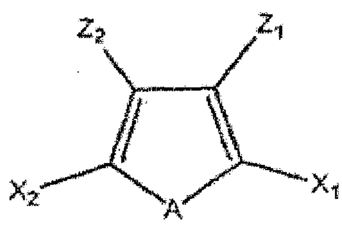

worin :

- A für ein Schwefel- oder Sauerstoffatom steht;
- $X_1$ und $X_2$ unabhängig voneinander aus der Gruppe von -COOH, -CONHOH, $-SO_3H$, $-PO_3H_2$, -P (O) OHQ, wobei Q für eine Alkyl-, Hydroxyalkyl- oder Oxoalkylgruppe steht, ausgewählt sind;

- $Z_1$ und $Z_2$ unabhängig voneinander aus der Gruppe von -H, -F, -Cl, -Br, -I, -OH, -OR, -SR, -NHR, -CHO, -COOR, $-CONR_1R_2$, $-NR_1R_2$, $-NR_1-NR_2R_3$, -R'-$SO_2$R' -$SO_3$R ausgewählt sind, wobei:
- R, $R_1$, $R_2$, $R_3$ unabhängig voneinander für H, eine Alkyl- oder Hydroxyalkylgruppe, die 1 bis 6 Kohlenstoffatome aufweisen, stehen;
- R' für eine Alkylen- oder Hydroxyalkylengruppe, die 1 bis 6 Kohlenstoffatome aufweisen, steht.

**12.** Verfahren nach einem der vorhergehenden Ansprüche, wobei die Stufe b) durch Ultrafiltration oder Nanofiltration ausgeführt wird.

**13.** Verfahren nach einem der vorhergehenden Ansprüche, wobei die Stufe des Inkontaktbringens a) mit einem vorgegebenen pH-Wert ausgeführt wird.

FIG. 1

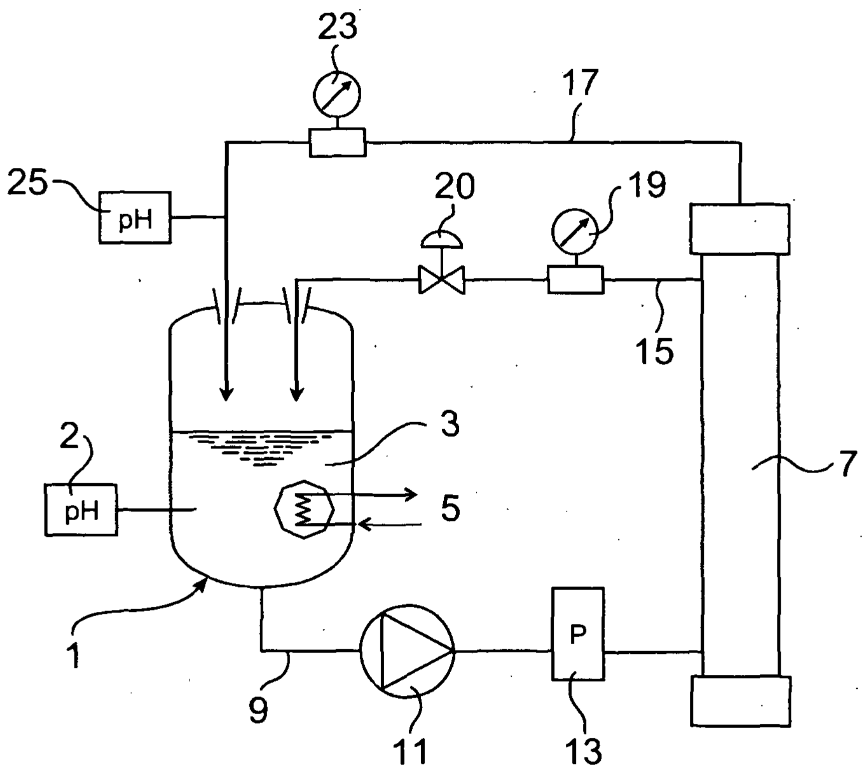
23
17
25
pH
20
19
15
3
7
2
pH
5
1
P
9
11
13

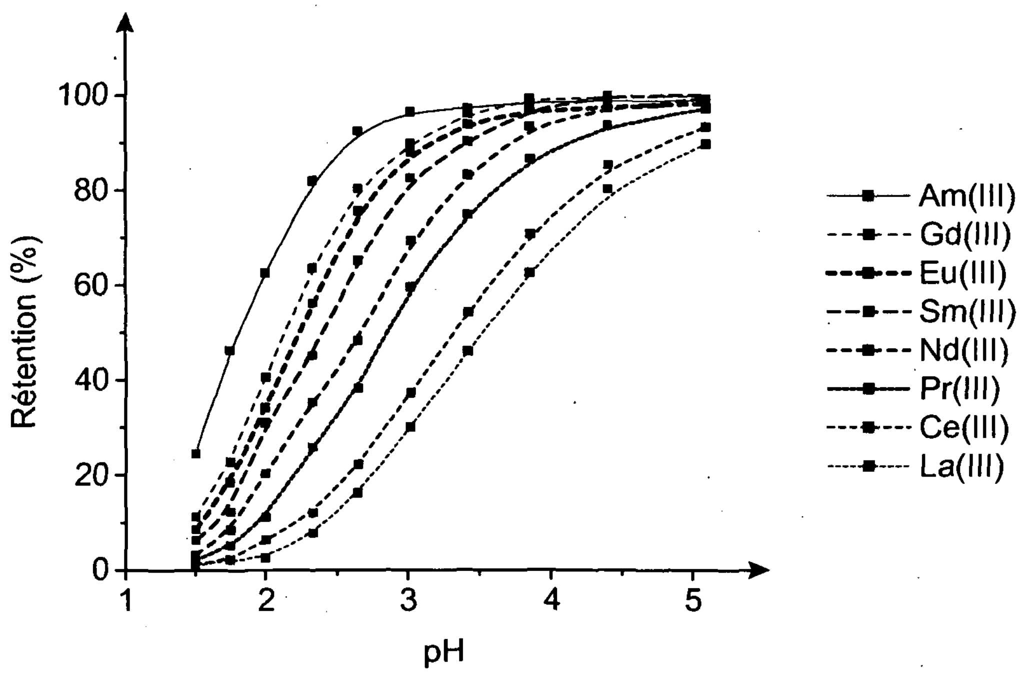
100
80
60
40
20
0
Rétention (%)
1
2
3
4
5
pH
Am(III)
Gd(III)
Eu(III)
Sm(III)
Nd(III)
Pr(III)
Ce(III)
La(III)

FIG. 2

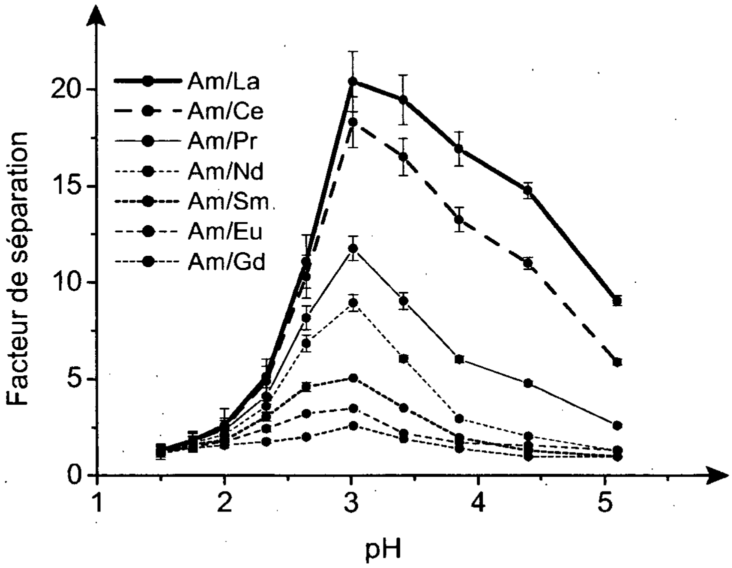


FIG. 3

FIG. 4

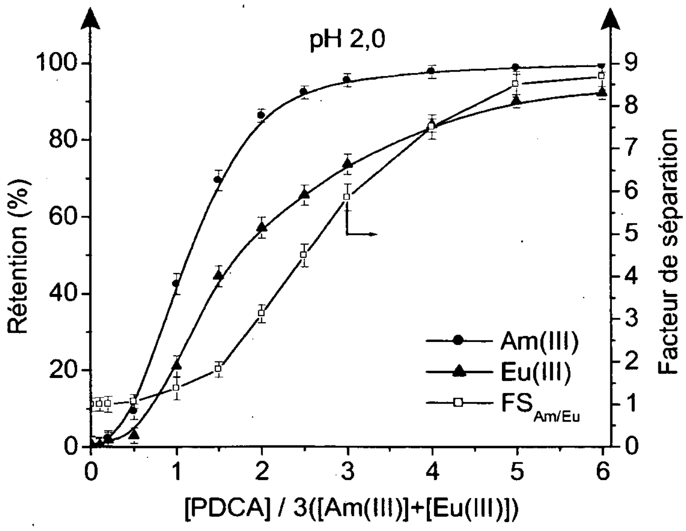


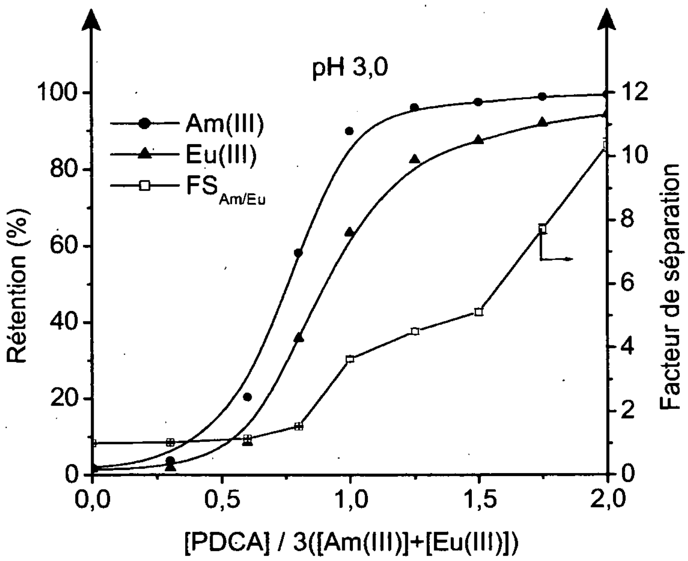


FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 0073521 A